# EUROPÄISCHE PATENTANMELDUNG

(11) **EP 3 570 406 A1**
(43) Veröffentlichungstag der Anmeldung: **20.11.2019**
(21) Anmeldenummer: 19152360.4
(22) Anmeldetag: 17.01.2019
(51) Int. Cl.: H02J 7/34, G04C 10/00, G04G 19/00

(54) **MOBILES GERÄT MIT VIBRATIONSSIGNALGEBER UND SCHWUNGMASSENGENERATOR**

(30) Priorität: 18.05.2018 DE 102018112008
(71) Anmelder: Innogy SE, 45128 Essen (DE)
(72) Erfinder: Becker, Dr. Gernot, 44269 Dortmund (DE)
(74) Vertreter: Cohausz & Florack

(57) **Zusammenfassung**

Mobiles Gerät 2 mit einem Prozessor 8 eingerichtet zum Steuern des mobilen Gerätes 2, einer Kommunikationseinrichtung 12 eingerichtet zum Senden und/oder Empfangen von Signalen, einem Signalgeber 18 mit einer Schwungmasse 22 und einem Antrieb, wobei der Antrieb und die Schwungmasse 22 motorisch betreibbar sind, um ein mechanisches Signals auszugeben, wobei bei einem motorischen Betrieb der Antrieb mit einem Wechselrichter 14 verbunden ist, und einem Energiespeicher 10, eingerichtet zum elektrischen Speisen zumindest des Prozessors 8, der Kommunikationseinrichtung 12 und des Signalgebers 18. Der Antrieb und die Schwungmasse 22 sind als Generator betreibbar sind, um die Bewegungsenergie der Schwungmasse 22 in elektrische Energie zu wandeln, und bei einem Betrieb als Generator ist der Antrieb mit einem Gleichrichter 16 verbunden ist um den Energiespeicher 10 zu speisen.

## Beschreibung

Der Gegenstand betrifft ein mobiles Gerät.

Der Anteil an mobilen Geräten, die in allen Lebensbereichen zum Einsatz kommen, wird in Zukunft ständig vergrößert. Mobile Geräte vereinfachen unsere Lebensabläufe und erhöhen den Komfort. Mobile Geräte verfügen in der Regel über ein hohes Maß an Konnektivität und eine gewisse Eigenintelligenz. Die Konnektivität wird beispielsweise durch Verbindungen mit Weitverkehrsnetzen, beispielsweise Mobilfunknetzen, lokalen Funknetzen, beispielsweise WLAN und/oder Nahfunknetzen, wie beispielsweise Bluetooth, RFID, NFC ermöglicht.

Beispiele für mobile Geräte sind beispielsweise Smartwatches, Smartglasses, Fitnesstracker, Sensoren im Bereich der Gesundheit, wie beispielsweise zum Überwachen von Vitalwerten wie Herzfrequenz, Blutdruck, Zuckerwerten und dergleichen.

Zur Komforterhöhung ist es notwendig, dass die mobilen Geräte möglichst unauffällig einsetzbar sind. Aus diesem Grunde sind die Geräte klein dimensioniert. Die stetige Miniaturisierung der Geräte führt jedoch zu Herausforderungen hinsichtlich deren Energieversorgung. Die mobilen Geräte müssen energetisch eigengespeist sein und somit über einen internen Energiespeicher verfügen. Dabei ist jedoch zu beachten, dass insbesondere auch das Volumen des Energiespeichers ausschlaggebend für dessen Kapazität ist. So müssen immer größere Anstrengungen unternommen werden, bei kleineren Geräten mit erhöhter Funktionalität eine zumindest gleichbleibende Laufzeit mit einer Ladung des Energiespeichers realisieren zu können. Vielfältige Verfahren und Vorrichtungen zum Energiemanagement sind bekannt, die alle daraufhin abzielen, die Betriebszeiten des Gerätes zu erhöhen.

Die bisher bekannten Verfahren zielen jedoch darauf ab, den Energieverbrauch des mobilen Gerätes beziehungsweise der in dem mobilen Gerät verbauten Einrichtungen soweit zu reduzieren, dass die Laufzeit des mobilen Gerätes trotz sinkender Kapazitäten des Energiespeichers auf einem akzeptablen Maß gehalten werden kann.

Somit lag dem Gegenstand die Aufgabe zu Grunde, ein mobiles Gerät zur Verfügung zu stellen, welches unter Ausnutzung bestehender Geräteinfrastruktur eine erhöhte Betriebsdauer aufweist.

Diese Aufgabe wird gegenständlich durch ein mobiles Gerät nach Anspruch 1 gelöst.

Ein mobiles Gerät kann dabei beispielsweise eine Uhr, ein Mobiltelefon, ein Tabletcomputer, eine Smartwatch, ein Fitnesstracker, ein Hörgerät, Smartglasses, ein Vitaltracker zum Erfassen von Gesundheitsdaten oder dergleichen, um nur einige zu nennen, sein.

In dem mobilen Gerät kann ein Prozessor eingebaut sein. Der Prozessor ist eingerichtet zum Steuern des mobilen Gerätes, insbesondere zum Steuern der Einrichtungen innerhalb des mobilen Gerätes und zur Steuerung der Interoperabilität der verschiedenen Einrichtungen innerhalb des Gerätes.

Eine Prozessoreinheit ist beispielsweise eine Kontrolleinheit, ein Mikroprozessor, eine Mikrokontrolleinheit wie ein Mikrocontroller, ein digitaler Signalprozessor (DSP), eine Anwendungsspezifische Integrierte Schaltung (ASIC) oder ein Field Programmable Gate Array (FPGA).

Innerhalb des mobilen Gerätes kann eine Kommunikationseinrichtung vorgesehen sein. Mit Hilfe der Kommunikationseinrichtung ist es möglich, Signale drahtlos zu senden und/oder zu empfangen. Die Kommunikationseinrichtung kann dabei einteilig oder mehrteilig sein und zur Kommunikation in einem oder verschiedenen Frequenzbändern mit einem oder verschiedenen Kommunikationsprotokollen eingerichtet sein. Mögliche Frequenzbänder können beispielsweise im Bereich zwischen 700 und 1000MHz, beispielsweise für GSM-Netze, im Bereich zwischen 1800 und 2200MHz, beispielsweise für UMZS-Netze, im Bereich zwischen 2400 und 2500MHz für beispielsweise Bluetooth und WLAN, sowie beispielsweise RFID, im Bereich zwischen 5700 und 5900MHz für beispielsweise ebenfalls WLAN, im Bereich zwischen 1800 und 1900MHz für beispielsweise DECT-Telefonie oder auch beispielsweise im Bereich zwischen 174 und 230MHz für beispielsweise DVBT und DAB Anwendungen sein. Andere Frequenzbänder sind ebenfalls möglich und gegenständlich umfasst.

Unterstützt Funkprotokolle können beispielsweise GSM, UMTS, DECT, LTE, WiMAX, WLAN, DVB, NFC, RFID und dergleichen sein. Die Kommunikationseinrichtung kann dabei integriert oder teilweise integriert aus verschiedenen Kommunikationsprozessoren gebildet sein.

In der Regel verfügen mobile Geräte über Signalgeber, um dem Benutzer eine Rückmeldung geben zu können. Signalgeber können akustisch oder mechanisch (haptisch) sein. Haptische Signalgeber verfügen dabei über eine Schwungmasse und einen Antrieb. Zum Ausgeben eines haptischen Signals werden der Antrieb und die Schwungmasse motorisch betrieben. Wird der Antrieb elektrisch gespeist, insbesondere mit einem elektrischen Wechselstrom, so wird die Schwungmasse in Bewegung versetzt und gibt ein mechanisches Signal aus. Dabei beginnt das mobile Gerät, abhängig von der Frequenz des magnetischen Erregerfelds, zu vibrieren. Ein Signalgeber kann beispielsweise zum Anzeigen von eingehenden Anrufen oder Nachrichten, zum Signalisieren von Terminen, zum Signalisieren von bestimmten Zuständen des Gerätes oder dergleichen verwendet werden. Auch ist mit dem Signalgeber ein Warnsignal ausgebbar, beispielsweise wenn das mobile Gerät einen kritischen gesundheitlichen Zustand des das mobile Gerät tragenden Menschen detektiert hat.

Zum Treiben des Antriebs ist ein Wechselrichter vorgesehen, der mit dem Energiespeicher des mobilen Gerätes elektrisch verbunden ist. Über den Wechselrichter lässt sich eine Wechselspannung an den Antrieb anlegen und abhängig von der Frequenz der Wechselspannung kann der Antrieb die Schwungmasse in Bewegung versetzen. Der Wechselrichter kann auch eine Kommutierung des anliegenden Stroms an einer bürstenlosen Gleichstrommaschine bewirken.

Der Wechselrichter ist mit einem Energiespeicher verbunden, der in der Regel als Akkumulator gebildet ist. Mit Hilfe des Energiespeichers wird das mobile Gerät elektrisch eigengespeist. Der Energiespeicher ist in dem mobilen Gerät verbaut. Der Energiespeicher kann aus einer oder mehreren Batteriezellen gebildet sein. Insbesondere eignen sich Lithium Ionen Akkumulatoren oder Lithium Polymer Akkumulatoren. Andere Akkumulatoren, die auf Lithiumbasis oder auch auf Basis anderer Materialien eine elektrochemische Zelle bilden, können geeignet sein.

In diesem Zusammenhang sei erwähnt, dass das mobile Gerät ein die in dem mobilen Gerät angeordneten Einrichtungen einhausendes Gehäuse aufweist. Das Gehäuse ist in der Regel geschlossen und verkapselt die darin angeordneten Einrichtungen vollständig. Das mobile Gerät kann neben den genannten Einrichtungen auch beispielsweise ein Display aufweisen, um eine grafische Benutzeroberfläche zu ermöglichen.

Um nun die Betriebszeit des mobilen Gerätes zu erhöhen, können - neben den bekannten Verfahren zur Energieeinsparung - der Antrieb und die Schwungmasse als Generator betrieben werden. Eine Schwungmasse an einem Antrieb kann nicht nur motorisch betrieben werden, sondern auch motorisch, in dem durch einen äußeren Impuls die Schwungmasse innerhalb des Antriebs bewegt wird. Der Antrieb ist in der Regel aus einer Mehrzahl zueinander angeordneten Spulen gebildet. Wenn die Schwungmasse permanentmagnetisch ist, so kann durch eine Bewegung der Schwungmasse relativ zu den Spulen des Antriebs eine elektrische Energie in den Spulen induziert werden und diese induzierte elektrische Energie kann zum Laden des Energiespeichers genutzt werden.

Bei einem generatorischen Betrieb von Schwungmasse und Antrieb wird die Bewegungsenergie der Schwungmasse in elektrische Energie gewandelt. Diese elektrische Energie wird von dem Antrieb über einen Gleichrichter an den Energiespeicher übertragen. Der Gleichrichter verfügt dabei bevorzugt nicht nur über gleichrichtende Eigenschaften, sondern kann auch um zusätzliche Funktionen des Lademanagements erweitert werden. So ist es beispielsweise möglich, dass der Gleichrichter den Ladezustand des Energiespeichers erfasst und der Prozessor abhängig hiervon einen generatorischen Betrieb von Antrieb und Schwungmasse ermöglicht.

Wird das mobile Gerät am Körper des Benutzers getragen, so wird die Schwungmasse stets bei einer Bewegung des Nutzers in Bewegung versetzt. Diese Bewegung kann dazu führen, dass in dem Antrieb eine elektrische Energie induziert wird, die zum Laden des Energiespeichers genutzt wird. Gegenständlich ist erkannt worden, dass lediglich eine neuartige Verschaltung zwischen Energiespeicher und Signalgeber nötig ist, um den Signalgeber nicht nur ausschließlich motorisch betreiben zu können, sondern auch generatorisch. Hierbei ist keine zusätzliche mechanische Komponente innerhalb des mobilen Gerätes notwendig, sondern die ohnehin vorhandenen mechanischen Komponenten werden genutzt. Gegenständlich wird jedoch der Signalgeber auf zwei verschiedene Arten betrieben, nämlich einerseits in der bekannten Art und Weise motorisch und andererseits neuartig als Generator.

Gemäß einem Ausführungsbeispiel wird vorgeschlagen, dass die Schwungmasse und der Antrieb in einer selben Baugruppe angeordnet sind. Schwungmasse und Antrieb können als Baugruppe den Signalgeber bilden. Integriert in dieser Baugruppe sind somit insbesondere die Spulen die den Antrieb zumindest in Teilen bilden sowie die Schwungmasse.

Gemäß einem Ausführungsbeispiel wird vorgeschlagen, dass der Antrieb eine elektrisch betriebene Drehstrommaschine ist und die Schwungmasse mit der Drehachse der Drehstrommaschine mechanisch verbunden ist. Eine Drehstrommaschine kann als Motor verstanden werden. Eine Drehstrommaschine kann dabei insbesondere eine Asynchronmaschine oder eine Synchronmaschine sein. Die Drehstrommaschine verfügt über eine Reihe von Spulen, die als Innenpolwicklung und vorzugsweise als Außenpolwicklung vorgesehen sind. Insbesondere ist die Schwungachse der Läufer der Maschine oder mit dem Läufer der Maschine verbunden und der Antrieb ist aus um den Läufer herum angeordneten Spulen gebildet. Bevorzugt ist der Antrieb ein bürstenloser Gleichstrommotor mit bevorzugt eigener elektronischer Kommutierung. Die elektronische Kommutierung kann dabei Teil des Wechselrichters sein, mit dem der Antrieb betrieben wird.

Eine besonders gute Energieausbeute ist dann möglich, wenn die Schwungmasse exzentrisch mit der Drehachse, mithin des Läufers verbunden ist. Jede Bewegung des mobilen Gerätes führt zu einer Aktivierung der Schwungmasse derart, dass diese den Läufer dreht und mithin eine Spannung in dem Antrieb induziert wird.

Auch ist es möglich, dass der Antrieb ein elektrisch betriebener Linearmotor ist. In diesem Fall kann die Schwungmasse den Läufer des Linearmotors selbst bilden. Insbesondere wird die Schwungmasse relativ zu sequenziell und linear hintereinander angeordneten Spulen, die den Antrieb als Linearmotor bilden, bewegt. Durch diese Bewegung wird in den Spulen eine Spannung induziert, die ebenfalls zum Speisen des Energiespeichers genutzt werden kann.

Wie bereits erwähnt, kann die Schwungmasse zumindest in Teilen permanent magnetisch sein und mit den Spulen in dem Antrieb magnetisch gekoppelt sein. Durch diese magnetische Koppelung erfolgt eine Induktion elektrischer Energie in den Spulen, wenn die Schwungmasse relativ zu den Spulen bewegt wird. Diese elektrische Energie kann zur Speisung des Energiespeichers genutzt werden.

Um die Trägheit der Schwungmasse optimal auszunutzen, wird vorgeschlagen, dass die Schwungmasse federnd in dem Antrieb gelagert ist. Insbesondere bei einer federnden Lagerung der Schwungmasse als Läufer des Linearmotors führt jede Bewegung des Nutzers dazu, dass die Schwungmasse mehrfach in dem Linearmotor hin und her schwingt und somit eine besonders hohe Energieausbeutung möglich ist.

Um sicher zu stellen, dass der Energiespeicher einerseits als Treiber für den Signalgeber genutzt werden kann und andererseits über den Signalgeber gespeist werden kann, kann ein Schalter vorgesehen sein. Der Schalter ist dabei einerseits zwischen dem Signalgeber und dem Gleichrichter und andererseits zwischen dem Signalgeber und dem Wechselrichter angeordnet. Der Schalter kann als Wechselschalter gebildet sein. Im motorischen Betrieb verbindet der Schalter den Wechselrichter mit dem Signalgeber. Dies führt dazu, dass der Signalgeber elektrisch gespeist wird und ein mechanisches Signal ausgeben kann, wie oben beschrieben. Im Falle des Generatorbetriebs verbindet der Schalter den Gleichrichter mit dem Signalgeber. Die durch die Bewegung des Nutzers eingekoppelte mechanische Energie wird, wie oben beschrieben, durch magnetische Induktion in elektrische Energie gewandelt und über den Gleichrichter dem Energiespeicher zugeführt.

Die Steuerung des Schalters erfolgt bevorzugt über den Prozessor. Mit Hilfe des Prozessors, in dem beispielsweise auch ein Beschleunigungssensor angeordnet sein kann, kann festgestellt werden, ob ein generatorischer Betrieb des Signalgebers sinnvoll ist oder nicht. Dies kann beispielsweise dann der Fall sein, wenn der Beschleunigungssensor anzeigt, dass eine ausreichend große Beschleunigung des mobilen Gerätes vorliegt. Andererseits, wenn ein mechanisches Signal ausgegeben werden soll, muss der Signalgeber motorisch betrieben werden. Über den Prozessor kann gesteuert werden, ob der Wechselrichter oder der Gleichrichter mit dem Signalgeber elektrisch verbunden ist und somit der Signalgeber motorisch oder generatorisch betrieben wird.

Der Energiespeicher hat bevorzugt eine Nennkapazität zwischen 10mAh und 100mAh, insbesondere zwischen 20mAh und 50mAh. Solche Nennkapazitäten sind ausreichend, ein mobiles Gerät über mehrere Stunden betreiben zu können. Wird mit Hilfe des gegenständlichen Signalgebers zusätzlich generatorisch elektrische Energie aus mechanischer Bewegungsenergie gewonnen, so kann die Betriebsdauer um 5 bis 10% verlängert werden, was bei mobilen Geräten eine Betriebsdauer von beispielsweise 1h bis 2h mehr bedeuten kann.

Nachfolgend wird der Gegenstand anhand einer ein Ausführungsbeispiel zeigenden Zeichnung näher erläutert. In der Zeichnung zeigt:
- Fig. 1: eine schematische Ansicht eines mobilen Gerätes, welches als Smartwatch gebildet ist;
- Fig. 2: den schematischen Aufbau eines mobilen Gerätes;
- Fig. 3a: die schematische Ansicht eines Signalgebers mit einer drehbaren Achse;
- Fig. 3b: eine schematische Ansicht eines Signalgebers mit einem Linearmotor.

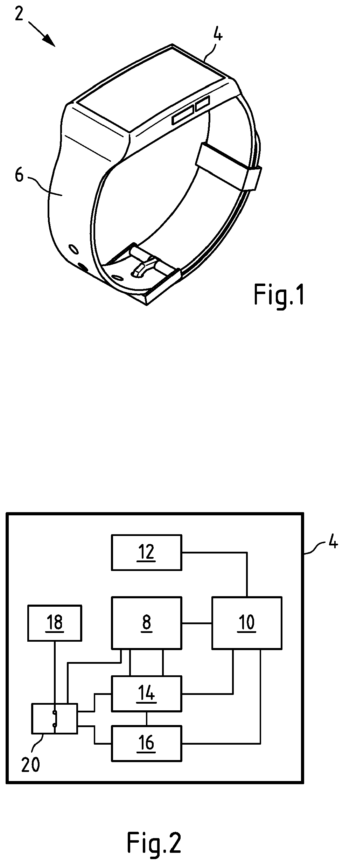

Fig. 1 zeigt ein mobiles Gerät 2 mit einem Gehäuse 4. Das mobile Gerät 2 ist beispielsweise eine Smartwatch und über ein Armband 6 am Körper des Nutzers zu befestigen. Durch diese Befestigung am Körper des Nutzers erfährt das Gehäuse 4 des mobilen Gerätes 2 stets eine Beschleunigung, wenn der Benutzer sich bewegt.

Gegenständlich wird diese Beschleunigung genutzt. Fig. 2 zeigt den schematischen Aufbau der Einrichtungen des mobilen Gerätes 2 in dem Gehäuse 4. Hierbei ist ein Prozessor 8 vorgesehen. Ferner ist in dem Gehäuse 4 ein Energiespeicher 10 angeordnet. Daneben ist eine Kommunikationseinrichtung 12 vorgesehen. Die Kommunikationseinrichtung 12 ist beispielsweise für eine Kommunikation über ein Weitverkehrsnetz, beispielsweise UMTS oder LTE und eine Kommunikation über ein lokales Netz, beispielsweise WLAN eingerichtet. Der Prozessor 8 ist mit dem Energiespeicher 10 verbunden und wird über diesen gespeist. Die Kommunikationseinrichtung 12 wird über den Prozessor 8 angesteuert und ist ebenfalls mit dem Energiespeicher 10 verbunden. Der Energiespeicher 10 ist darüber hinaus mit einem Wechselrichter 14 und einem Gleichrichter 16 verbunden. Der Prozessor 8 steuert den Wechselrichter 14 als auch den Gleichrichter 16. Der Wechselrichter 14 kann beispielsweise eine elektronische Kommutierung eines als Gleichstrommotor gebildeten Signalgebers 18 bewirken.

Der Wechselrichter 14 als auch der Gleichrichter 16 sind über einen Schalter 20 mit dem Signalgeber 18 wechselweise verbunden. Der Prozessor 8 steuert den Schalter 20 derart, dass entweder der Wechselrichter 14 oder der Gleichrichter 16 mit dem Signalgeber 18 verbunden ist und mithin somit der Energiespeicher 10 mit dem Signalgeber 18 verbunden ist.

Im motorischen Betrieb verbindet der Schalter 20 den Energiespeicher 10 über den Wechselrichter 14 mit dem Signalgeber 18. Im generatorischen Betrieb verbindet der Schalter 20 den Energiespeicher 10 über den Gleichrichter 16 mit dem Signalgeber 18.

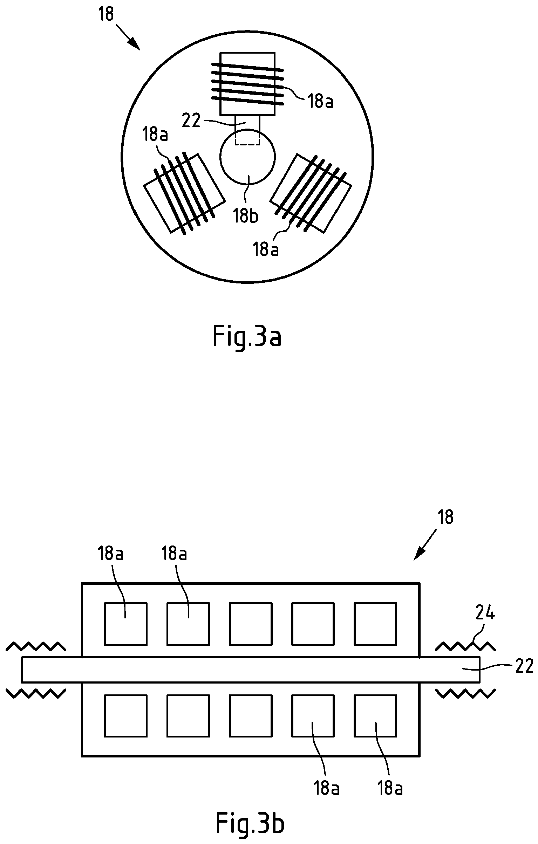

Fig. 3a zeigt schematisch einen Querschnitt durch einen Signalgeber 18 der aus einen Antrieb bildenden Spulen 18a und einer Welle 18b gebildet ist und darüber hinaus eine Schwungmasse 22 aufweist.

Die Spulen 18a sind in bekannter Art und Weise über den Schalter 20 mit dem Energiespeicher 10 verbunden. Je nach Art der Drehfeldmaschine sind die Spulen 18a verschiedenartig geschaltet und können beispielsweise als bürstenloser Gleichstrommotor mit elektronischer Kommutierung betrieben werden. In diesem Fall ist der Wechselrichter 14 auch für die elektronische Kommutierung des in dem Signalgeber 18 zu erzeugenden Wechselfeldes verantwortlich. Über das Wechselfeld wird die Welle 18b, an der ein Permanentmagnet angeordnet ist, in Drehung versetzt.

An der Welle 18b ist eine Schwungmasse 22, wie in der Fig. 3a dargestellt, exzentrisch angeordnet. Durch die Drehung der Welle 18b und der durch die Schwungmasse 22 bewirkten Unwucht kann eine Vibration des Gehäuses 4 des mobilen Gerätes 2 beim motorischen Betrieb des Signalgebers 18 erzeugt werden.

Wird der Signalgeber 18 generatorisch betrieben, so führt die Schwungmasse 22 aufgrund einer Beschleunigung, die von extern eingebracht wird, zu einer Drehung der Welle 18b. Diese Drehung führt zu einer Induktion einer elektrischen Energie in den Spulen 18a, welche über den Gleichrichter 16 abgegriffen werden kann von dem Signalgeber 18 zu dem Energiespeicher 10 fließt um diesen zu geladen. Das Lademanagement des Energiespeichers 10 kann durch den Wechselrichter 16 vorgenommen werden. Auch kann der Prozessor 8 das Lademanagement teilweise oder vollständig übernehmen.

Fig. 3b zeigt ein weiteres Ausführungsbeispiel, bei dem der Signalgeber 18 als Linearmotor gebildet ist und die Spulen 18a sequenziell nebeneinander angeordnet sind und den Antrieb bilden und die Schwungmasse 22 zwischen diesen Spulen 18 geführt ist und diese beispielsweise über eine Feder federnd in den Spulen 18 gelagert ist.

Wird elektrische Spannung in bekannter Art und Weise an die Spulen 18a angelegt, so kann die Schwungmasse 22 linear zwischen den Spulen 18a bewegt werden, was zu einer Vibration des Gehäuses 4 führt. Auf der anderen Seite kann eine Beschleunigung der Schwungmasse 22 dazu genutzt werden, in den Spulen 18a eine elektrische Energie zu induzieren. Dies insbesondere, wenn die Schwungmasse 22 permanentmagnetisch ist. Die in den Spulen 18 induzierte Spannung wird über den Gleichrichter 16 abgegriffen und dient zur Speisung des Energiespeichers 10.

Mit Hilfe des gegenständlichen mobilen Gerätes ist es möglich, unter Ausnutzung bestehender mechanischer Komponenten die Laufzeit zu verlängern.

## Patentansprüche

1. Mobiles Gerät mit
- einem Prozessor eingerichtet zum Steuern des mobilen Gerätes,
- einer Kommunikationseinrichtung eingerichtet zum Senden und/oder Empfangen von Signalen,
- einem Signalgeber mit einer Schwungmasse und einem Antrieb, wobei der Antrieb und die Schwungmasse motorisch betreibbar sind, um ein mechanisches Signals auszugeben, wobei bei einem motorischen Betrieb der Antrieb mit einem Wechselrichter verbunden ist, und
- einem Energiespeicher, eingerichtet zum elektrischen Speisen zumindest des Prozessors, der Kommunikationseinrichtung und des Signalgebers,
**dadurch gekennzeichnet,**
- **dass** der Antrieb und die Schwungmasse als Generator betreibbar sind, um die Bewegungsenergie der Schwungmasse in elektrische Energie zu wandeln, und bei einem Betrieb als Generator der Antrieb mit einem Gleichrichter verbunden ist um den Energiespeicher zu speisen.

2. Mobiles Gerät nach Anspruch 1,
**dadurch gekennzeichnet,**
- **dass** die Schwungmasse und der Antrieb in einer selben Baugruppe angeordnet sind.

3. Mobiles Gerät nach Anspruch 1 oder 2,
**dadurch gekennzeichnet,**
- **dass** der Antrieb eine elektrisch betriebene Drehstrommaschine ist und die Schwungmasse mit der Drehachse der Drehstrommaschine mechanisch verbunden ist.

4. Mobiles Gerät nach Anspruch 3,
**dadurch gekennzeichnet,**
- **dass** die Schwungmasse exzentrisch mit der Drehachse der Drehstrommaschine verbunden ist.

5. Mobiles Gerät nach Anspruch 1 oder 2,
**dadurch gekennzeichnet,**
- **dass** der Antrieb ein elektrisch betriebener Linearmotor ist und die Schwungmasse den Läufer des Linearmotors bildet

6. Mobiles Gerät nach einem der vorangehenden Ansprüche,
**dadurch gekennzeichnet,**
- **dass** die Schwungmasse permanentmagnetisch ist und mit einer Spule in dem Antrieb magnetisch gekoppelt ist.

7. Mobiles Gerät nach einem der vorangehenden Ansprüche,
**dadurch gekennzeichnet,**
- **dass** die Schwungmasse federnd in dem Antrieb gelagert ist.

8. Mobiles Gerät nach einem der vorangehenden Ansprüche,
**dadurch gekennzeichnet,**
- **dass** ein Schalter zwischen dem Signalgeber und dem Gleichrichter einerseits und dem Wechselrichter andererseits angeordnet ist und dass der Schalter im motorischen Betrieb den Wechselrichter mit dem Signalgeber verbindet und dass der Schalter im generatorischen Betrieb den Gleichrichter mit dem Signalgeber verbindet.

9. Mobiles Gerät nach einem der vorangehenden Ansprüche,
**dadurch gekennzeichnet,**
- **dass** der Prozessor den Wechselrichter, den Gleichrichter und den Schalter derart ansteuert, dass der Wechselrichter den Signalgeber im motorischen Betrieb mit einem Wechselstrom speist und dass der Gleichrichter den Energiespeicher bei einem generatorischen Betrieb mit Gleichstrom speist.

10. Mobiles Gerät nach einem der vorangehenden Ansprüche,
**dadurch gekennzeichnet,**
- **dass** der Energiespeicher eine Nennkapazität zwischen 10mAh und 100mAh, vorzugsweise zwischen 20mAh und 50mAh aufweist.
